# EUROPEAN PATENT APPLICATION

(11) **EP 4 611 225 A1**
(43) Date of publication of application: **03.09.2025**
(21) Application number: 23882154.0
(22) Date of filing: 23.06.2023
(51) Int. Cl.: H02K 3/34, H02K 3/46

(54) **ROTARY ELECTRIC MACHINE**

(30) Priority: 27.10.2022 JP 2022172712
(71) Applicant: Hitachi Industrial Equipment Systems Co., Ltd., Tokyo 101-0021 (JP); Hitachi, Ltd., Tokyo 100-8280 (JP)
(72) Inventor: ASAUMI, Yusuke, Tokyo 100-8280 (JP); ENOMOTO, Yuji, Tokyo 100-8280 (JP); TOKOI, Hirooki, Tokyo 100-8280 (JP); HASEGAWA, Yu, Tokyo 100-8280 (JP); TAKEUCHI, Keisuke, Tokyo 100-8280 (JP); SAKAI, Toru, Tokyo 101-0021 (JP)
(74) Representative: MERH-IP Matias Erny Reichl Hoffmann Patentanwälte PartG mbB
(86) International application number: PCT/JP2023/023404
(87) International publication number: WO 2024/089937

(57) **Abstract**

A stator includes a stator iron core including a plurality of slots, and bobbins fitted into the slots. Each of the bobbins includes flanges provided at both respective ends of the stator in an axial direction, and protrusions provided on the respective flanges. The stator iron core includes projections protruding from inner surfaces of the slots. The bobbins are positioned by engaging the protrusions and the projections to each other.

## Description

### TECHNICAL FIELD

The present invention relates to a rotary electric machine such as a motor, particularly to a rotary electric machine used in industrial machines.

### BACKGROUND ART

A rotary electric machine that increases the winding space factor of a stator by using segment coils, which are flat wires with a flat cross section, as conducting wires and that achieves high power density and size reduction has been developed. In the rotary electric machine, the divided segment coils are fitted into a plurality of coil insertion holes formed in a bobbin provided inside each slot of the stator, so that further size reduction, high productivity, and low costs are realized.

Patent Document 1 describes a structure in which a concave portion is provided in a back yoke of a stator core, a projection is provided in a bobbin, and the bobbin is positioned by fitting the projection to the concave portion.

### CITATION LIST

### PATENT DOCUMENT

Patent Document 1: JP 2016-208730 A

### SUMMARY OF THE INVENTION

### PROBLEMS TO BE SOLVED BY THE INVENTION

When the divided segment coils are inserted into the bobbin provided inside each slot of the stator, the bobbin may move in a radial direction or an axial direction and be misaligned, which leads to a decrease in workability and a decrease in productivity.

In addition, when an attempt is made to insert the coil into the bobbin that is misaligned, it is considered that the coil may hit the wall of the bobbin to cause damage to the bobbin.

In the structure of Patent Document 1, in order to fit the projection of the bobbin into the concave portion, the projection needs to be angled. When the angle is large, the force required for press-fitting increases, and the risk of damage to the bobbin increases. When damage occurs to the projection at any location in the axial direction, it is difficult to check the location after assembly, and a reliability issue arises.

Regarding the positioning of the bobbin to improve workability when the divided segment coils are inserted into the bobbin provided inside each slot of the stator, there is a demand to realize the positioning of the bobbin using a structure that reduces the risk of damage.

An object of the present invention is to position bobbins in a rotary electric machine in a state where both workability and reliability are ensured.

### SOLUTIONS TO PROBLEMS

A rotary electric machine according to one aspect of the present invention includes a stator; and a rotor disposed to be rotatable about a rotation axis. The stator includes a stator iron core including a plurality of slots, and bobbins fitted into the slots. Each of the bobbins includes flanges provided at both respective ends of the stator in an axial direction, and protrusions provided on the respective flanges. The stator iron core includes projections protruding from inner surfaces of the slots. The bobbins are positioned by engaging the protrusions and the projections to each other.

### EFFECTS OF THE INVENTION

According to one aspect of the present invention, in the rotary electric machine, it is possible to position the bobbins in a state where both workability and reliability are ensured.

### BRIEF DESCRIPTION OF THE DRAWINGS

Fig. 1A is a perspective view of a rotary electric machine 100 of a first embodiment.
Fig. 1B is a radial cross-sectional view of the rotary electric machine 100.
Fig. 2A is a perspective view of a coil 5 during assembly.
Fig. 2B is a perspective view of the coil 5 after assembly.
Fig. 3A is a perspective view of a bobbin 20.
Fig. 3B is a partial enlarged view of Fig. 3A.
Fig. 3C is a side view of the bobbin 20.
Fig. 3D is a partial enlarged view of Fig. 3C.
Fig. 4A is a perspective view of a stator core 4.
Fig. 4B is a top view of the stator core 4.
Fig. 4C is a partial enlarged view of Fig. 4B.
Fig. 5A is a perspective view showing the bobbin 20 being inserted into a slot 7 of the stator core 4.
Fig. 5B is a perspective view after all the bobbins 20 are inserted into the slots 7 of the stator core 4.
Fig. 5C is a cross-sectional view after all the bobbins 20 are inserted into the slots 7 of the stator core 4.
Fig. 5D is a perspective view showing a convex segment coil 11 and a concave segment coil 12 being inserted into the bobbin 20.
Fig. 5E is a perspective view of a stator 6 after all the convex segment coils 11 and the concave segment coils 12 are inserted.
Fig. 5F is a perspective view showing a protrusion radial outer surface 31 of a protrusion 23 abutting against projection radial inner surfaces 34 of projections 24.
Fig. 5G is a cross-sectional view of Fig. 5F.
Fig. 5H is a perspective view showing a state where the protrusions 24 are in contact with the projection 23 in an axial direction.
Fig. 5I is a perspective view showing the protrusion radial inner surface 31 of the protrusion 23 being in contact with the projection radial inner surfaces 34 of the projections 24.
Fig. 5J is a cross-sectional view of Fig. 5I.
Fig. 6A is a top view of teeth 9 of a second embodiment.
Fig. 6B is a partially enlarged top view of a core back 10.
Fig. 6C is a perspective view of the stator core 4 during assembly.
Fig. 6D is a partially enlarged top view of the stator core 4.
Fig. 7A is a perspective view of a convex-side stator 25 into which the convex segment coils 11 are inserted according to a third embodiment.
Fig. 7B is a partial enlarged view of Fig. 7A.
Fig. 7C is a perspective view of a concave-side stator 26 into which the concave segment coils 12 are inserted.
Fig. 7D is a partial enlarged view of Fig. 7C.
Fig. 7E is a perspective view of the rotary electric machine 100 formed by combining the convex-side stator 25 and the concave-side stator 26 during assembly.
Fig. 7F is a perspective view of the rotary electric machine 100 after assembly.

### MODE FOR CARRYING OUT THE INVENTION

Hereinafter, embodiments of the present invention will be described with reference to the drawings. However, the present invention should not be interpreted as being limited to the contents of the embodiments to be described below. Those skilled in the art easily understand that specific configurations of the present invention can be changed without departing from the concept or scope of the present invention.

Incidentally, in each drawing for describing the embodiments, the same components will be denoted by the same names and reference signs, and repeated descriptions thereof will be omitted.

The present embodiment relates to an inner rotor type rotary electric machine. A coil is a distributed winding type, and is configured by fitting divided segment coils into a plurality of coil insertion holes formed in bobbins provided inside slots of a stator. A rotor may be an embedded magnet type rotor in which a rotor core includes a plurality of magnet insertion holes and which is formed by inserting magnets into the magnet insertion holes, or may be a surface magnet type rotor formed by affixing magnets to the surface of a rotor core. In addition, the rotary electric machine may be an induction motor that does not use magnets, a synchronous reluctance motor, or a switched reluctance motor.

### First embodiment

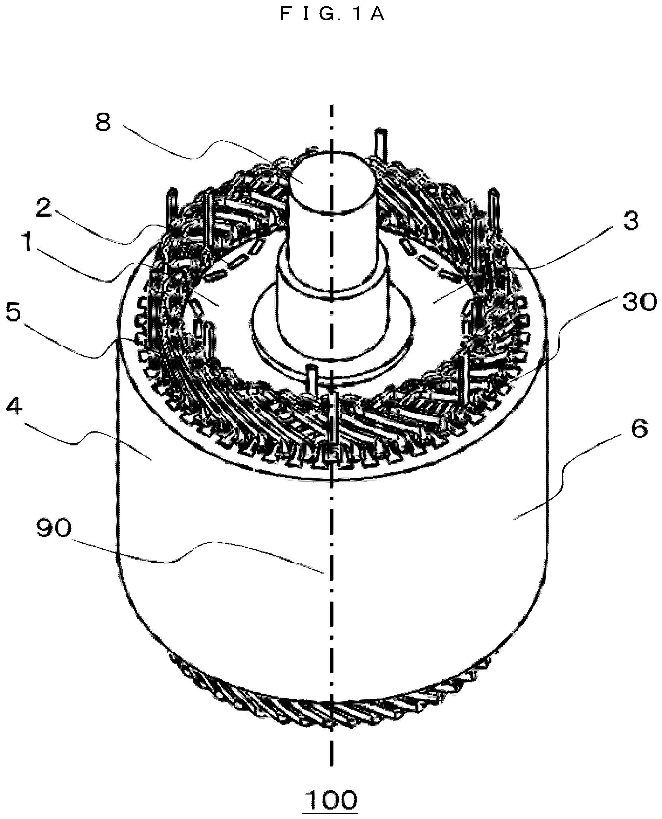

A first embodiment of the present invention will be described with reference to Figs. 1A to 5J.

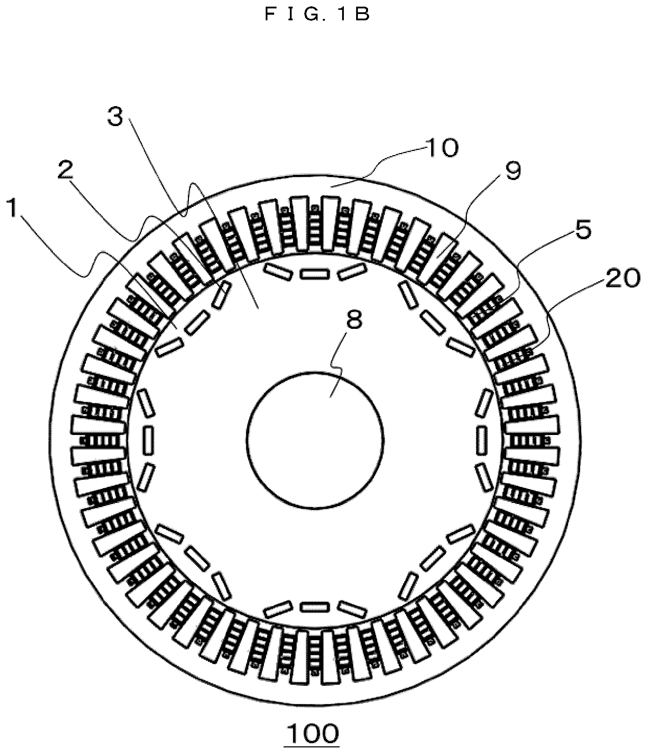

Fig. 1A is a perspective view of a rotary electric machine 100, and Fig. 1B is a radial cross-sectional view of the rotary electric machine 100.

The outer rotor type rotary electric machine 100 includes a rotor 3 composed of a rotor core (rotor iron core) 1 and a permanent magnet 2, and a stator 6 disposed on a radial inner side of the rotor 3 with a predetermined gap therebeween, and composed of a stator core (stator iron core) 4 and a coil 5. The rotor 3 is disposed to be rotatable about a rotation axis 90.

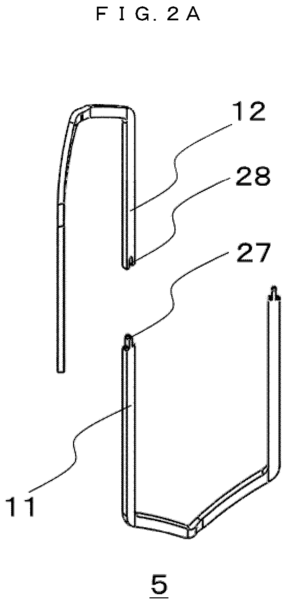

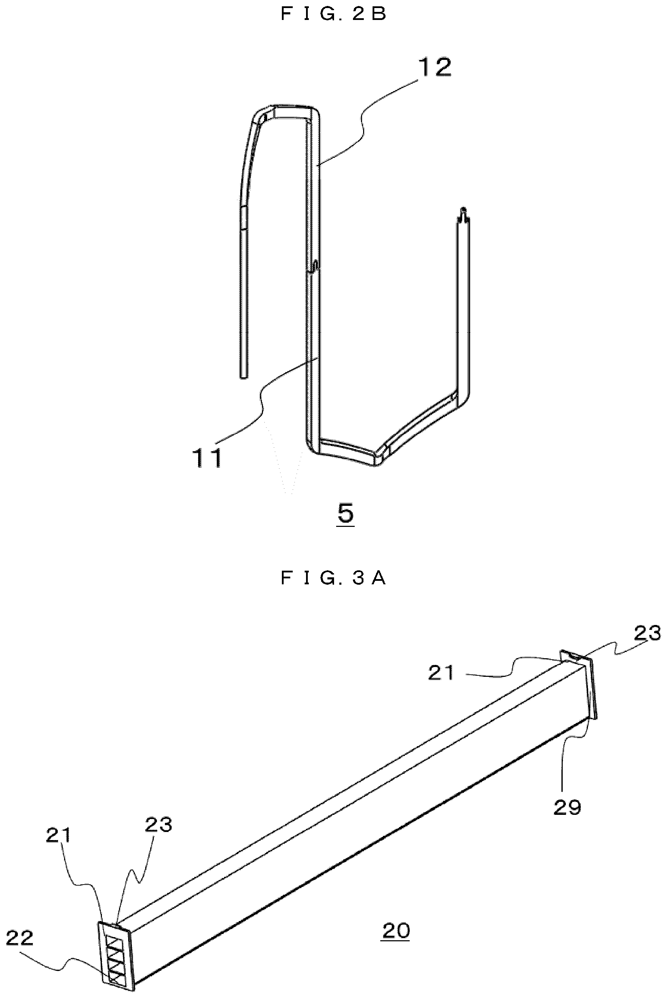

Fig. 2A is a perspective view of the coil 5 during assembly, and Fig. 2B is a perspective view of the coil 5 after assembly.

The coil 5 is configured by fitting convex segment coils 11 and concave segment coils 12 into a plurality of coil insertion holes 22 formed in a bobbin 20 provided inside a slot 7 of the stator 6.

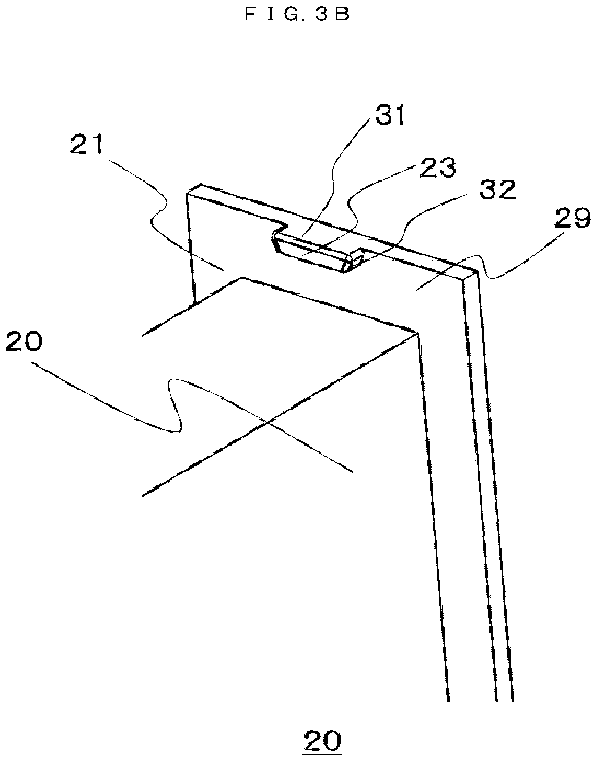

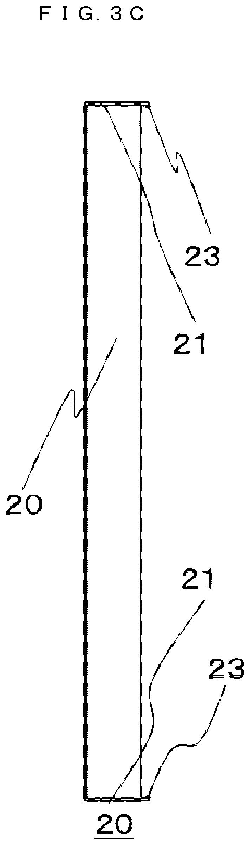

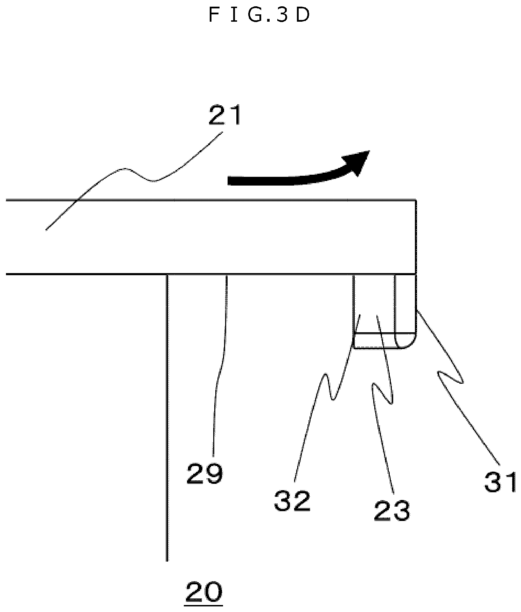

Fig. 3A is a perspective view of the bobbin 20, and Fig. 3B is a partially enlarged view of Fig. 3A. Fig. 3C is a side view of the bobbin 20, and Fig. 3D is a partially enlarged view of Fig. 3C.

The bobbin 20 includes the plurality of coil insertion holes 22 extending in an axial direction, and includes flanges 21 at both end portions in the axial direction. In addition, the flanges 21 include protrusions 23 on a surface side thereof that come into contact with the stator core **4.** The bobbin 20 is produced by injection-molding, for example, an elastic material such as resin. The flanges 21 can be bent in the direction of an arrow in Fig. 3D by producing the bobbin 20 from an elastic material.

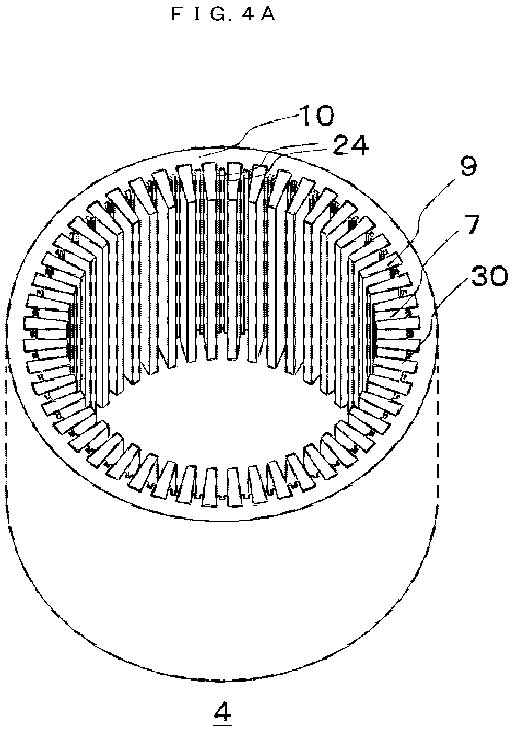

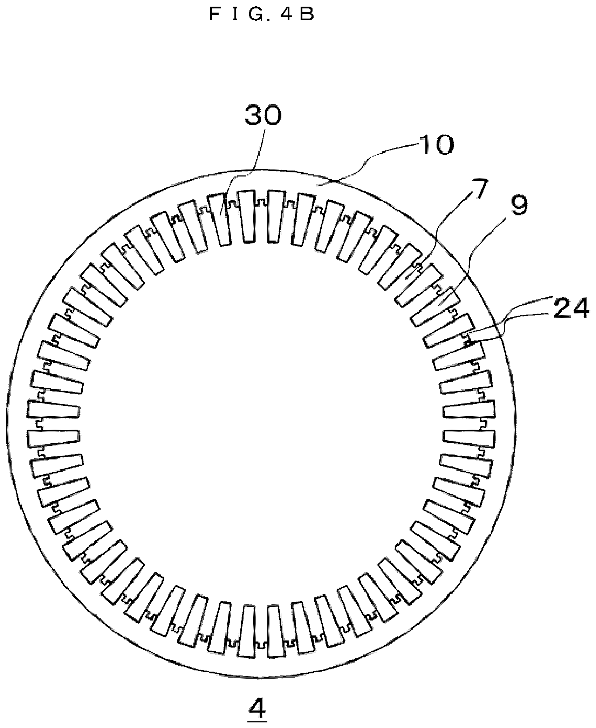

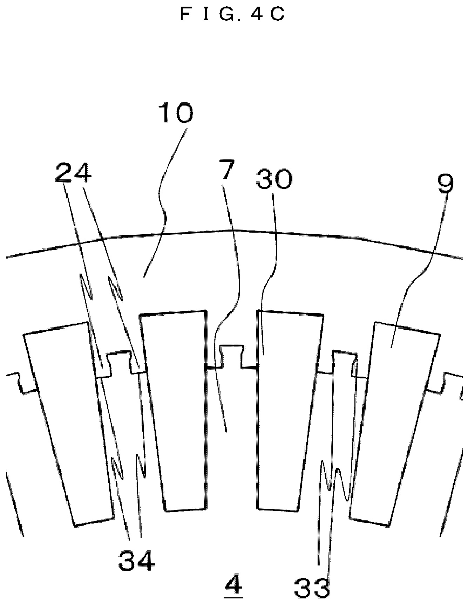

Fig. 4A is a perspective view of the stator core 4, and Fig. 4B is a top view of the stator core **4.** Fig. 4C is a partial enlarged view of Fig. 4B.

The stator core 4 is composed of a core back 10 and teeth 9 extending in a radially inward direction of the core back 10. Projections 24 are provided on an inner surface of the slot 7 sandwiched between the teeth 9 of the stator core 4. Reference sign 30 denotes an end face of the stator core 4.

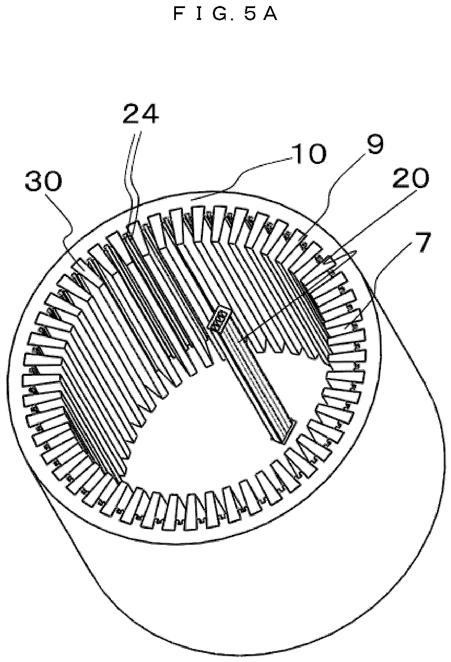

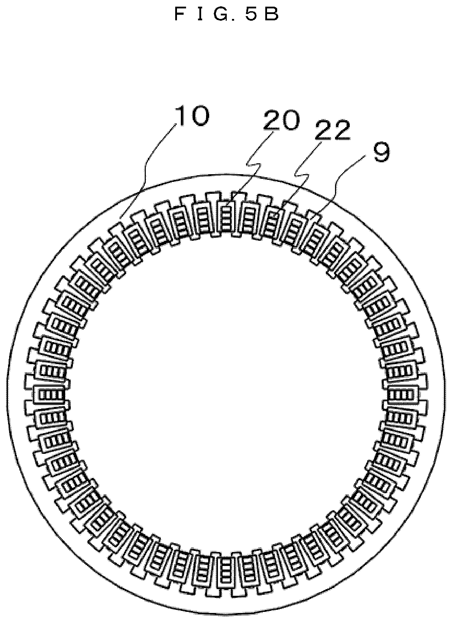

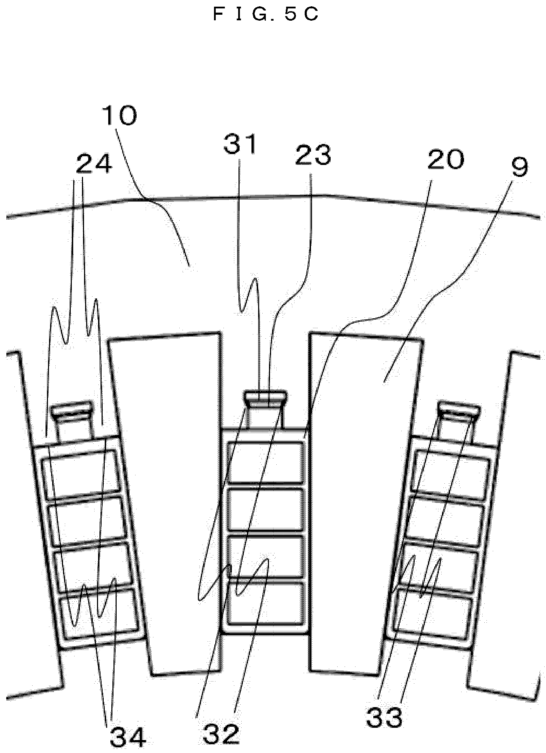

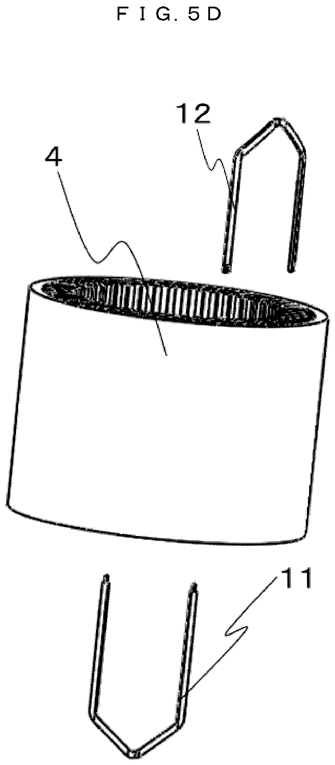

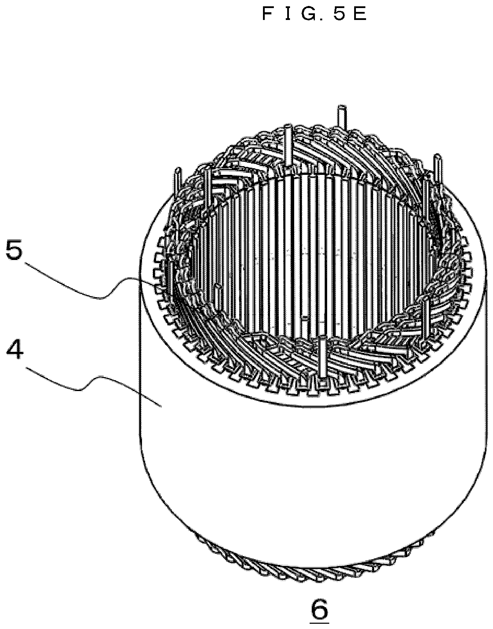

Fig. 5A is a perspective view showing the bobbin 20 being inserted into the slot 7 of the stator core 4, and Fig. 5B is a perspective view after all the bobbins 20 are inserted into the slots 7 of the stator core 4. Fig. 5C is a cross-sectional view after all the bobbins 20 are inserted into the slots 7 of the stator core 4, and Fig. 5D is a perspective view showing the convex segment coil 11 and the concave segment coil 12 being inserted into the bobbin 20. Fig. 5E is a perspective view of the stator 6 after all the convex segment coils 11 and the concave segment coils 12 are inserted.

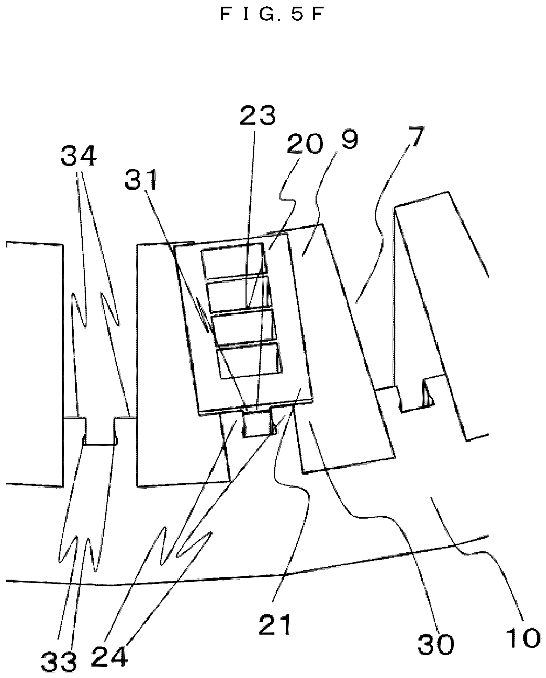

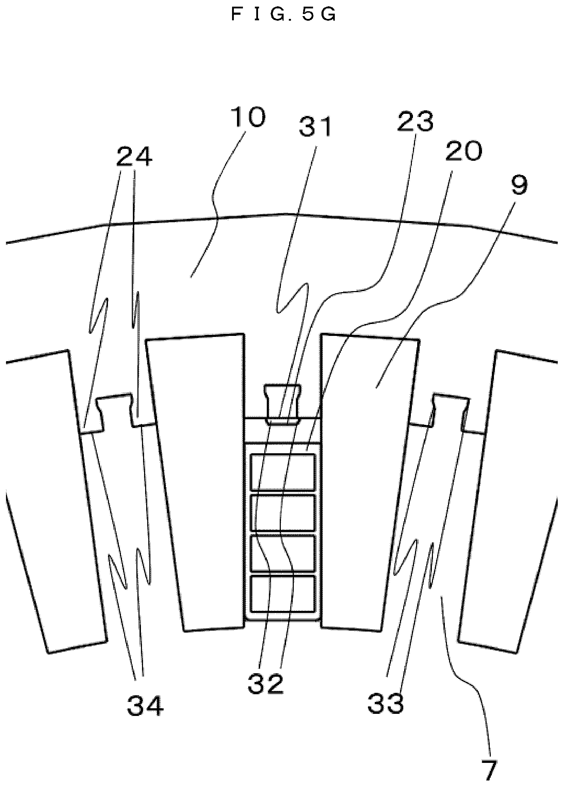

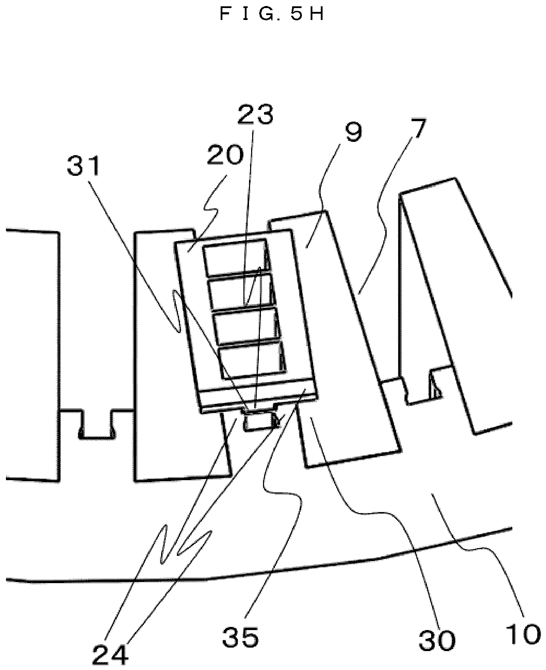

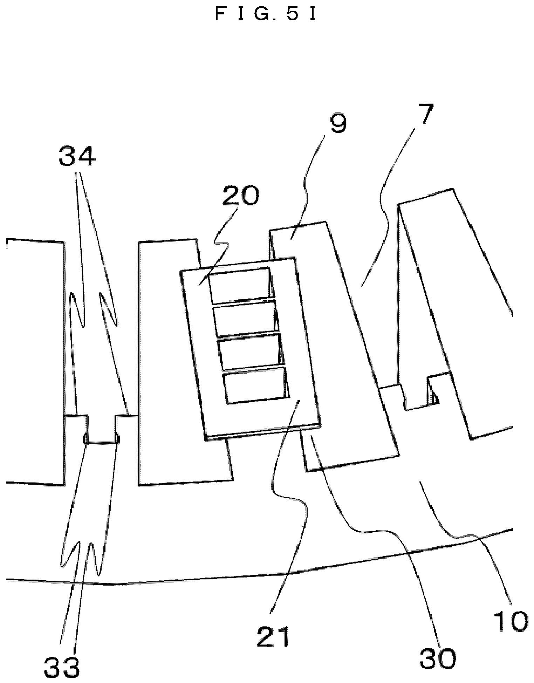

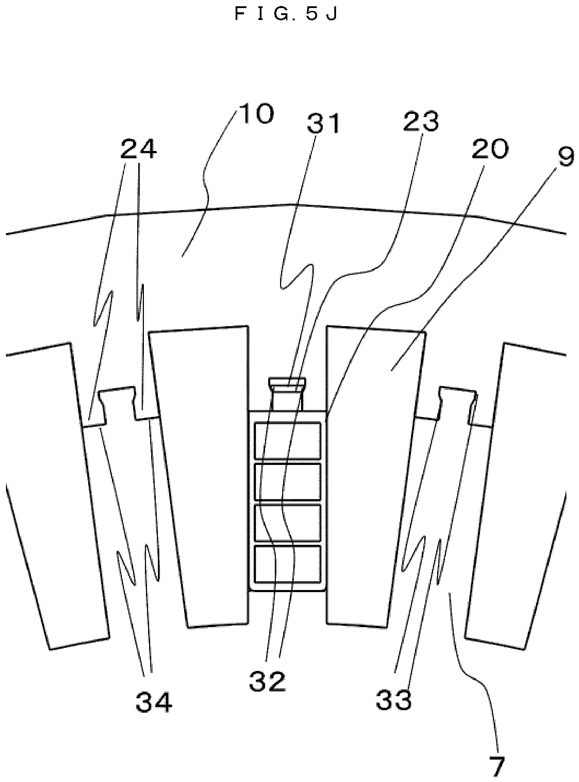

Fig. 5F is a perspective view showing a protrusion radial outer surface 31 of the protrusion 23 abutting against projection radial inner surfaces 34 of the projections 24. Fig. 5G is a cross-sectional view at that time. Fig. 5H is a perspective view showing a state where the flange 21 is bent in the direction of the arrow in Fig. 3D to become an elastically deformed flange 35, and the protrusions 24 are in contact with the projection 23 in the axial direction. Fig. 5I is a perspective view showing the protrusion radial inner surface 31 of the protrusion 23 being in contact with the projection radial inner surfaces 34 of the projections 24. Fig. 5J is a cross-sectional view at that time.

Since the bobbin 20 includes the flanges 21 at both end portions in the axial direction, the bobbin 20 cannot be inserted into the slot 7 of the stator core 4 in the axial direction. The bobbin 20 is inserted into the slot 7 of the stator core 4 in a radial direction. When the bobbin 20 is inserted in the radial direction, the protrusion radial outer surfaces 31 of the protrusions 23 about against the projection radial inner surfaces 34 of the projections 24; however, when the bobbin 20 is further pushed in, the flanges 21 are bent in the direction of the arrow in Fig. 3D, so that the protrusions 24 come into contact with the projections 23 in the axial direction. When the flanges 21 are further pushed from that position, the flanges 21 return to the original shape, and the protrusion radial inner surfaces 31 of the protrusions 23 and the projection radial outer surfaces 34 of the projections 24 come into contact with each other.

Accordingly, the stator core 4 and the bobbin 20 are engaged with each other in the radial direction. With this structure, since the bobbin is fixed in the axial direction and the radial direction, workability when the convex segment coils 11 and the concave segment coils 12 are inserted thereinto becomes good, and productivity is improved.

### Second embodiment

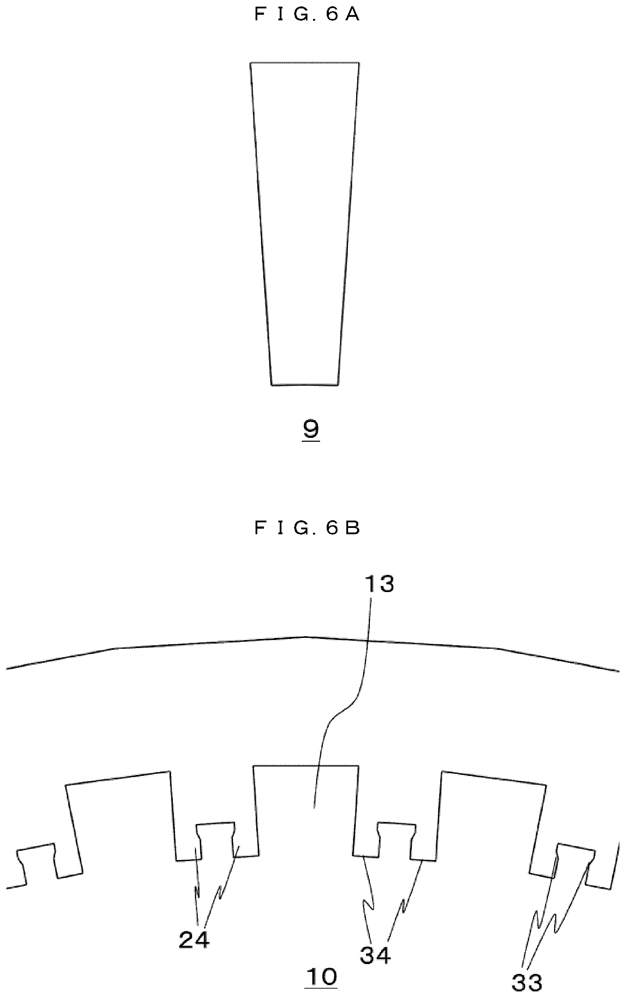

A second embodiment of the present invention will be described with reference to Figs. 6A to 6D.

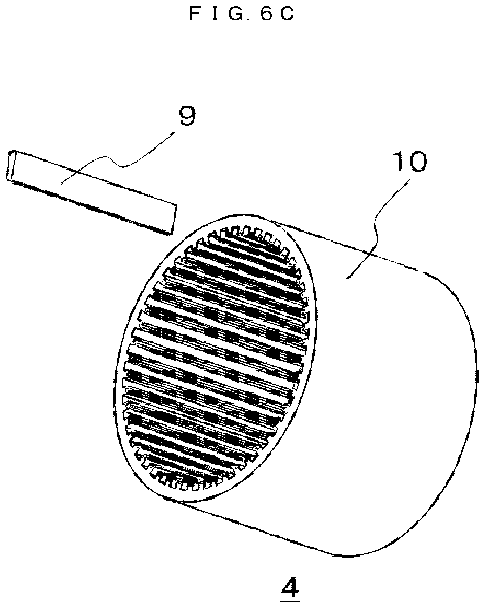

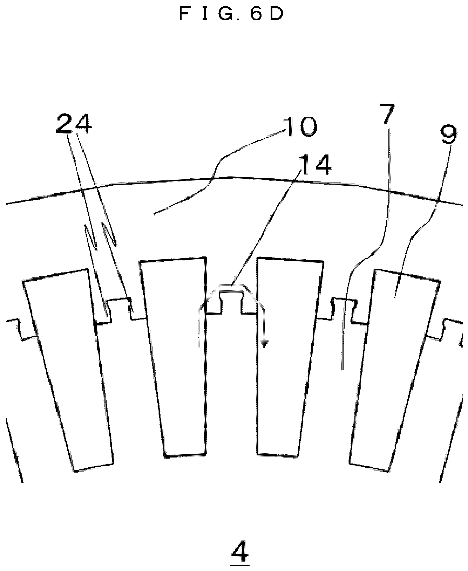

Fig. 6A is a top view of the teeth 9, and Fig. 6B is a partially enlarged top view of the core back 10. Fig. 6C is a perspective view of the stator core 4 during assembly, and Fig. 6D is a partially enlarged top view of the stator core 4.

The stator core 4 is configured such that the teeth 9 and the core back 10 are formed as separate components, and is configured by inserting the teeth 9 into teeth insertion grooves 13 of the core back 10 in the axial direction. By forming the teeth 9 and the core back 10 as separate components, for example, amorphous can be used for the material of the teeth 9, and an electromagnetic steel sheet can be used for the material of the core back 10. Accordingly, loss occurring in the teeth 9 can be reduced.

In addition, even when the same material is used for the teeth 9 and the core back 10, excess material generated when the shape of the integrated stator core 4 is created by punching or the like can be reduced.

In this case, as in Patent Document 1, when concave portions are provided at bases of the teeth 9 that come into contact with the core back 10, the contact area between the teeth 9 and the core back 10 is reduced, so that the holding strength of the teeth 9 is weakened.

In the second embodiment, engagement portions between the stator core 4 and the bobbins 20 are located at central portions of the slots 7, and contact surfaces between the teeth 9 and the core back 10 are not reduced.

In addition, as in Patent Document 1, when the concave portions are provided at the bases of the teeth 9 that come into contact with the core back 10, magnetic fluxes do not pass through the concave portions, and magnetic resistance increases, so that efficiency decreases.

In the second embodiment, since the engagement portions between the stator core 4 and the bobbins 20 are located at the central portions of the slots 7, a magnetic flux flow 14 (refer to Fig. 6D) is formed, and magnetic resistance is reduced compared to the structure having concave portions at the bases, so that efficiency is improved.

Since the assembly of the teeth 9 and the core back 10, the insertion of the bobbins 20 after the stator core 4 is formed, and the insertion of the convex segment coils 11 and the concave segment coils 12 are the same as in the first embodiment, the description thereof will be omitted.

### Third embodiment

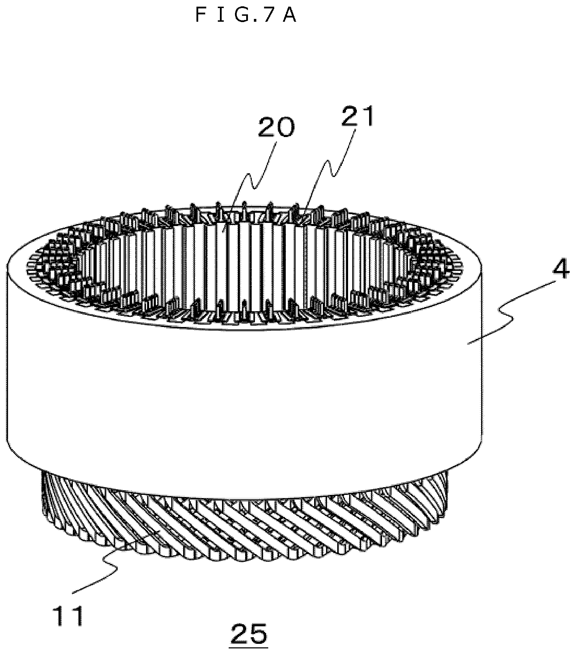

A third embodiment of the present invention will be described with reference to Figs. 7A to 7F.

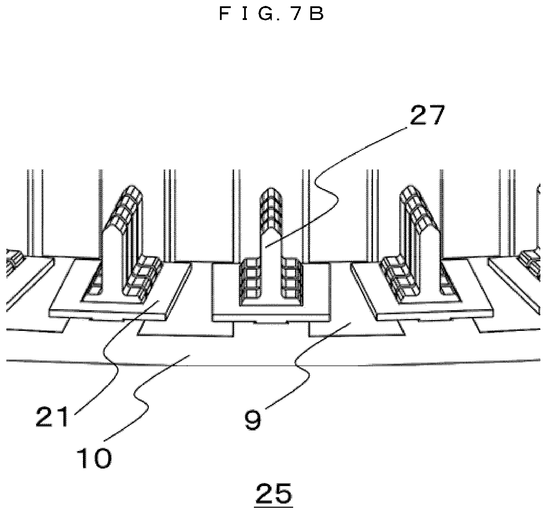

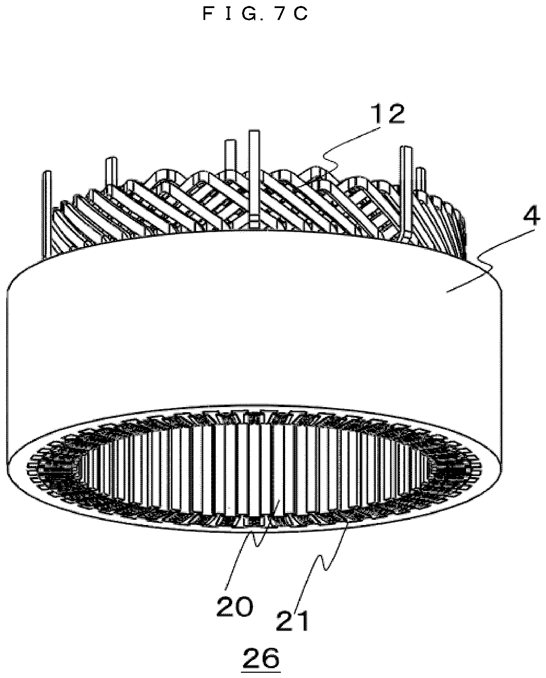

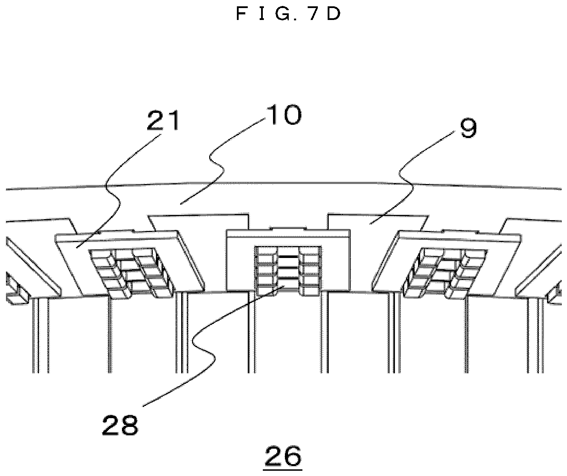

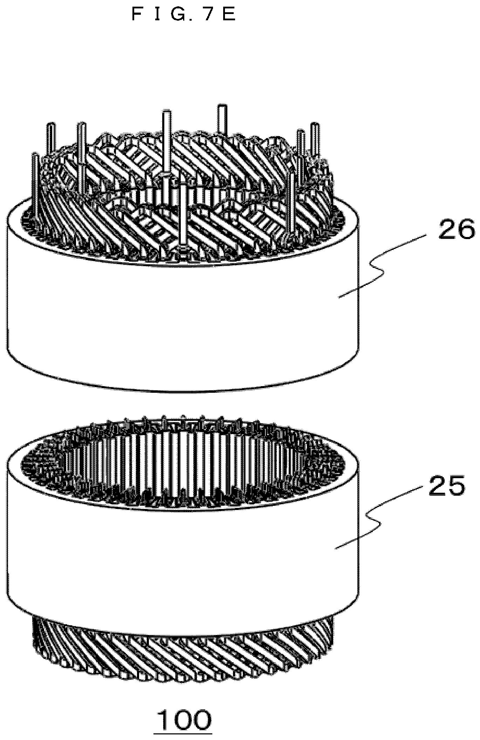

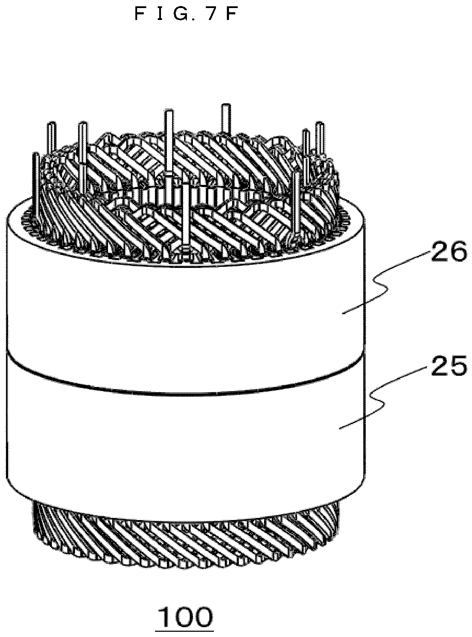

Fig. 7A is a perspective view of a convex-side stator 25 into which the convex segment coils 11 are inserted, and Fig. 7B is a partially enlarged view of Fig. 7A. Fig. 7C is a perspective view of a concave-side stator 26 into which the concave segment coils 12 are inserted, and Fig. 7D is a partially enlarged view of Fig. 7C. Fig. 7E is a perspective view of the rotary electric machine 100 formed by combining the convex-side stator 25 and the concave-side stator 26 during assembly, and Fig. 7F is a perspective view of the rotary electric machine 100 after assembly.

The convex-side stator 25 is configured by inserting the bobbins 20 into the slots 7 of the stator core 4 in the radial direction and then inserting the convex segment coils 11 into the coil insertion holes 22. At this time, since the bobbins 20 are fixed in the axial direction and the radial direction similarly to the first embodiment, workability is good.

The concave-side stator 26 is configured by inserting the bobbins 20 into the slots 7 of the stator core 4 in the radial direction and then inserting the concave segment coils 12 into the coil insertion holes 22. At this time, since the bobbins 20 are fixed in the axial direction and the radial direction similarly to the first embodiment, workability is good.

Convex portions 27 of the convex-side segment coils 11 and concave portions 28 of the segment coils 12 can be visually checked from axial end faces. Accordingly, when the convex-side stator 25 and the concave-side stator 26 are assembled, it is possible to perform assembly while checking whether the convex portions 27 (refer to Fig. 7B) and the concave portions 28 (refer to Fig. 7D) can be correctly fitted to each other. For this reason, reliability is improved without the occurrence of poor fitting.

In addition, since the bobbins 20 are fixed in the axial direction and the radial direction, it is possible to prevent misalignment of the bobbins 20 that may occur when the convex-side stator 25 and the concave-side stator 26 are turned upside down during the assembly of the convex-side stator 25 and the concave-side stator 26, so that workability is good.

Regarding fitting surfaces of the convex-side stator 25 and the concave-side stator 26, a structure that ensures a creepage distance for insulation between the stator core 4 and both the convex-side segment coils 11 and the concave segment coils 12 is required, however, with this structure, the creepage distance can be ensured by the flanges 21.

According to the embodiments, the protrusions extending in the axial direction from the flanges of the bobbin and the projections extending in the radial direction from the inner surface of the slot engage with each other, so that the bobbin can be positioned. For this reason, workability when the divided segment coils are inserted becomes good, and productivity is improved.

In addition, by providing the protrusions of the bobbin on back sides of the flanges that are prone to elastic deformation, the risk of damage to the bobbin decreases, and reliability is improved. Even when the bobbin is damaged during insertion, damage can be easily found visually since the locations of elastic deformation are the axial end faces.

In such a manner, according to the embodiments, in the rotary electric machine, the bobbins can be positioned in a state where both workability and reliability are ensured.

### REFERENCE SIGNS LIST

- 1: Rotor core
- 2: Permanent magnet
- 3: Rotor
- 4: Stator core
- 5: Coil
- 6: Stator
- 7: Slot
- 8: Shaft
- 9: Teeth
- 10: Core back
- 11: Convex segment coil
- 12: Concave segment coil
- 13: Teeth insertion groove
- 14: Magnetic flux flow
- 20: Bobbin
- 21: Flange
- 22: Coil insertion hole
- 23: Protrusion
- 24: Projection
- 25: Convex-side stator
- 26: Concave-side stator
- 27: Concave portion
- 28: Concave portion
- 29: Contact surface of bobbin
- 30: End face of stator core
- 31: Protrusion radial outer surface
- 32: Protrusion radial inner surface
- 33: Projection radial outer surface
- 34: Projection radial inner surface
- 35: Elastically deformed flange
- 90: Rotation axis
- 100: Rotary electric machine

## Claims

1. A rotary electric machine comprising:
a stator; and
a rotor disposed to be rotatable about a rotation axis,
wherein the stator includes a stator iron core including a plurality of slots, and bobbins fitted into the slots,
each of the bobbins includes flanges provided at both respective ends of the stator in an axial direction, and protrusions provided on the respective flanges, and
the stator iron core includes projections protruding from inner surfaces of the slots, and the bobbins are positioned by engaging the protrusions and the projections to each other.

2. The rotary electric machine according to claim 1,
wherein the protrusions are located on contact surfaces that come into contact with respective end faces of the stator iron core, and are provided on the flanges to extend in the axial direction.

3. The rotary electric machine according to claim 1,
wherein the flanges are configured to be elastically deformable, and
the protrusions of the bobbin are provided on back sides of the flanges.

4. The rotary electric machine according to claim 3,
wherein the flanges are made of an elastic material that is bendable in a predetermined direction.

5. The rotary electric machine according to claim 1,
wherein each of the bobbins includes a plurality of coil insertion holes extending in the axial direction, and
in a state where the bobbin is positioned, convex segment coils and concave segment coils are fitted to each other inside the coil insertion holes.

6. The rotary electric machine according to claim 1,
wherein the stator includes a core back and a plurality of teeth extending in a radially inward direction of the core back,
each of the slots is sandwiched between the teeth,
the projections are provided on the inner surfaces of the slots, and
the bobbins are inserted into the slots in a radial direction of the stator.

7. The rotary electric machine according to claim 6,
wherein the bobbins are inserted into the slots in the radial direction, so that radial inner surfaces of the protrusions and radial outer surfaces of the projections come into contact with each other to engage the protrusions and the projections with each other, and the bobbins are fixed in the axial direction and the radial direction.

8. The rotary electric machine according to claim 6,
wherein the protrusions and the projections engage with each other at central portions of the slots.

9. The rotary electric machine according to claim 6,
wherein the core back and the teeth are formed as separate components, and
the stator iron core is configured by fitting the teeth into the core back.

10. The rotary electric machine according to claim 9,
wherein the core back includes teeth insertion grooves, and
the teeth are fitted into the core back by inserting the teeth into the teeth insertion grooves in the axial direction.

11. The rotary electric machine according to claim 9,
wherein the teeth are made of an amorphous material, and
the core back is made of an electromagnetic steel sheet.

12. The rotary electric machine according to claim 1,
wherein the stator iron core is composed of a first stator iron core and a second stator core,
the bobbins are fitted into each of the first stator iron core and the second stator iron core, and
the first stator iron core and the second stator iron core are in contact with each other via the flanges.

## Amended claims

### Amended claims under Art. 19.1 PCT

1. A rotary electric machine comprising:
a stator; and
a rotor disposed to be rotatable about a rotation axis,
wherein the stator includes a stator iron core including a plurality of slots, and bobbins fitted into the slots,
each of the bobbins includes flanges provided at both respective ends of the stator in an axial direction, and protrusions provided on the respective flanges,
the stator iron core includes projections protruding from inner surfaces of the slots, and
the bobbins are positioned by engaging the protrusions and the projections to each other.

2. The rotary electric machine according to claim 1,
wherein the protrusions are located on contact surfaces that come into contact with respective end faces of the stator iron core, and are provided on the flanges to extend in the axial direction.

3. The rotary electric machine according to claim 1,
wherein the flanges are configured to be elastically deformable, and
the protrusions of the bobbin are provided on back sides of the flanges.

4. The rotary electric machine according to claim 3,
wherein the flanges are made of an elastic material that is bendable in a predetermined direction.

5. The rotary electric machine according to claim 1,
wherein each of the bobbins includes a plurality of coil insertion holes extending in the axial direction, and
in a state where the bobbin is positioned, convex segment coils and concave segment coils are fitted to each other inside the coil insertion holes.

6. The rotary electric machine according to claim 1,
wherein the stator includes a core back and a plurality of teeth extending in a radially inward direction of the core back,
each of the slots is sandwiched between the teeth,
the projections are provided on the inner surfaces of the slots, and
the bobbins are inserted into the slots in a radial direction of the stator.

7. The rotary electric machine according to claim 6,
wherein the bobbins are inserted into the slots in the radial direction, so that radial inner surfaces of the protrusions and radial outer surfaces of the projections come into contact with each other to engage the protrusions and the projections with each other, and the bobbins are fixed in the axial direction and the radial direction.

8. (After amendment) The rotary electric machine according to claim 6,
wherein the protrusions and the projections engage with each other at central portions of the slots.

9. The rotary electric machine according to claim 6,
wherein the core back and the teeth are formed as separate components, and
the stator iron core is configured by fitting the teeth into the core back.

10. The rotary electric machine according to claim 9,
wherein the core back includes teeth insertion grooves, and
the teeth are fitted into the core back by inserting the teeth into the teeth insertion grooves in the axial direction.

11. The rotary electric machine according to claim 9,
wherein the teeth are made of an amorphous material, and
the core back is made of an electromagnetic steel sheet.

12. (After amendment) A rotary electric machine comprising:
a stator; and
a rotor disposed to be rotatable about a rotation axis,
wherein the stator includes a stator iron core including a plurality of slots, and bobbins fitted into the slots,
each of the bobbins includes flanges provided at both respective ends of the stator in an axial direction, and protrusions provided on the respective flanges,
the stator iron core includes projections protruding from inner surfaces of the slots,
the bobbins are positioned by engaging the protrusions and the projections to each other,
the stator iron core is composed of a first stator iron core and a second stator core,
the bobbins are fitted into each of the first stator iron core and the second stator iron core, and
the first stator iron core and the second stator iron core are in contact with each other via the flanges.

13. (Addition) The rotary electric machine according to claim 12,
wherein the first stator iron core is a convex-side stator into which convex segment coils are inserted, and
the second stator iron core is a concave-side stator into which concave segment coils are inserted.

14. (Addition) The rotary electric machine according to claim 13,
wherein the convex-side stator is configured by inserting the bobbins into the slots in a radial direction of the stator, and then inserting the convex segment coils into coil insertion holes, and
the concave-side stator is configured by inserting the bobbins into the slots in the radial direction of the stator, and then inserting the concave segment coils into the coil insertion holes.

15. (Addition) The rotary electric machine according to claim 13,
wherein the convex-side segment coils include convex portions,
the concave segment coils include concave portions, and
the convex-side stator and the concave-side stator are assembled by fitting the convex portions and the concave portions to each other.

16. (Addition) The rotary electric machine according to claim 15,
wherein at fitting surfaces of the convex-side stator and the concave-side stator, a creepage distance for insulation between both the convex-side segment coils and the concave segment coils and both the convex-side stator and the concave-side stator is ensured by the flanges.
